Europäisches Patentamt

European Patent Office

Office européen des brevets

(19)

(11) Publication number: 0 339 983
A2

# (12) EUROPEAN PATENT APPLICATION

(21) Application number: 89304175.6

(22) Date of filing: 26.04.89

(51) Int. Cl.⁴: **G 01 P 13/00**
**G 01 D 5/20**

(30) Priority: 29.04.88 GB 8810214

(43) Date of publication of application:
02.11.89 Bulletin 89/44

(84) Designated Contracting States:
DE ES FR GB IT SE

(71) Applicant: **LUCAS INDUSTRIES public limited company**
**Great King Street**
**Birmingham, B19 2XF West Midlands (GB)**

(72) Inventor: **Moore, John Howard**
**The Spinney Kingscote**
**Tetbury Gloucestershire (GB)**

**Harvey, Ian James**
**12 Greyfriars Walk**
**Cirencester Gloucestershire, GL7 8UF (GB)**

**Willis, Christopher Andrew**
**7 Bowly Road Chesterton**
**Cirencester Gloucestershire, GL 7 7SE (GB)**

(74) Representative: **Foster, David Martyn et al**
**MATHISEN MACARA & CO. The Coach House 6-8**
**Swakeleys Road**
**Ickenham Uxbridge UB10 8BZ (GB)**

(54) **Movement transducer.**

(57) A linear transducer has an electrically conducting rod 5, mechanically connected to respond to the movement to be detected, which slides within an electrical winding 8 mounted on an insulating former 6. The winding 8 is connected as part of an LC circuit for an oscillator 24. As the rod 5 moves inwardly of the winding 8, eddy currents are induced in it by the energised winding 8 and reduce the inductive component of the electrical impedance of the winding. The resultant change in oscillator frequency is a measure of the movement to be detected. The transducer has an external metal casing 14. In order to prevent such eddy currents being induced in the casing 14 as to mask the effect of changes in eddy currents induced in the rod 5, the casing 14 is provided with means, such as an axially directed slit, which significantly increases the impedance of the eddy current paths within it. The slit may be sealed off by suitable electrically insulating material, so as to enable the interior of the transducer to be pressurised if a particular application requires this.

Fig. 1.

MEASURING UNIT

EP 0 339 983 A2

**Description**

## MOVEMENT TRANSDUCER

### BACKGROUND OF THE INVENTION

The invention relates to transducers for producing an electrical signal in response to movement. In an embodiment of the invention to be described in more detail below, the transducer has a core movable within an electrical winding. The core is an electrically conducting rod or other structure which has an electrically closed circuit and which is arranged with the intention that eddy currents will be induced in it when the winding is electrically energised by a time-varying current, the eddy currents being dependent on the position of the rod within the winding. As the rod is inserted in the coil, the effective a.c. complex impedance of the coil decreases. A suitable electrical circuit arrangement is connected to respond to changes in the complex impedance of the winding and this gives a measure of the displacement of the rod within the winding and thus a measure of the movement to be detected.

### BRIEF SUMMARY OF THE INVENTION

According to the invention, there is provided an electrical transducer, comprising an electrical winding, an electrically conductive member movable with respect to the winding in dependence on movement to be detected such that eddy currents are induced in the member in dependence on the relative position of the member and the winding and affect the electrical impedance of the winding, means for detecting changes in the impedance of the winding whereby to detect the said movement, and an external casing of conductive material, the casing being adapted to increase the electrical impedance of the paths within it for eddy currents induced in it by the said winding, such as to reduce the magnitude of the latter eddy currents and thereby reduce their effect on changes in electrical impedance in the said member.

According to the invention, there is further provided a linear movement-sensitive electrical transducer, comprising a cylindrical metal outer casing, a cylindrical electrically insulating former inside the casing and coaxial therewith, an electrical winding wound on the former, an electrically conducting core member slidable axially with reference to the former and the winding whereby eddy currents induced in the core by the energised winding are dependent on the axial position of the member with reference to the winding and change its electrical impedance accordingly, and impedance means electrically interrupting the eddy current paths in the metal casing whereby to minimise the eddy currents induced therein by the winding.

In this way, therefore, a movement transducer operating on the eddy current principle can be enclosed within a metal tube without adverse effect on its operation.

This enables the transducer to be used in circumstances, examples of which will be referred to below, where a closely spaced external metal casing is required.

### BRIEF DESCRIPTION OF THE DRAWINGS

A linear movement transducer embodying the invention will now be described, by way of example only, with reference to the accompanying diagrammatic drawings in which:

Figure 1 is a schematic cross-section through the transducer and also incorporates a schematic circuit diagram;

Figures 2,3 and 4 are perspective views of different possible forms of metal casing for the transducer of Figure 1; and

Figure 5 is a cross-section through another possible form of the metal casing to an enlarged scale.

### DESCRIPTION OF THE PREFERRED EMBODIMENTS

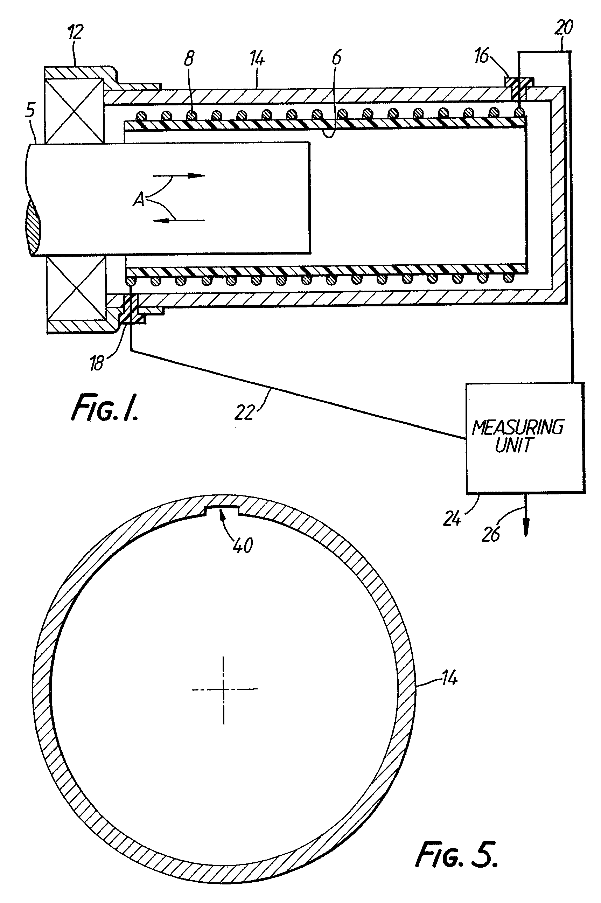

As shown in Figure 1, the transducer comprises an electrically conducting rod 5 which is slidable, in the direction of the arrows A, within a hollow electrically insulating cylindrical former 6 around which is wound a sense coil or winding 8. The rod 5 is sealingly slidable through a bore in a gland 10 which is supported in an end cap 12 attached in suitable fashion to an external tube 14. Electrical connections to the two ends of the winding 8 are made through insulators 16 and 18, and the two ends of the winding are connected via leads 20 and 22 to a measuring unit 24.

The measuring unit 24 comprises an electrical oscillator circuit of any suitable type whose oscillating frequency is determined by (for example) an inductance-capacitance (LC) circuit connected to it, the winding 8 being connected, via the connections 20 and 22, so as to form at least part of the inductance of this circuit.

The rod 5 is mechanically connected, by means not shown, to the member or component whose movement is to be sensed or measured, so that the extent of this movement determines the extent to which the rod 5 extends within the winding 8. As the rod 5 moves further into the winding 8 from the position shown, eddy currents induced in it by the energised winding will increase, thus reducing the inductive component of the a.c. impedance of the winding. There is therefore a resultant change in the frequency of oscillation of the oscillator within measuring unit 24, and this change in oscillator frequency is a measure of the movement to be detected and is output on a line 26.

However, if the casing 14 is metal and electrically conductive, eddy currents will also be induced in it by the winding 8. The effect of these eddy currents will be to reduce drastically the inductance of the winding 8 and render it insensitive to movement of the rod 5. In such a case, the oscillator frequency would change relatively little with movement of the rod and the transducer would be less able accurately to sense the movement.

In order to overcome this problem, therefore, it is necessary to inhibit the flow of eddy currents in the external casing 14.

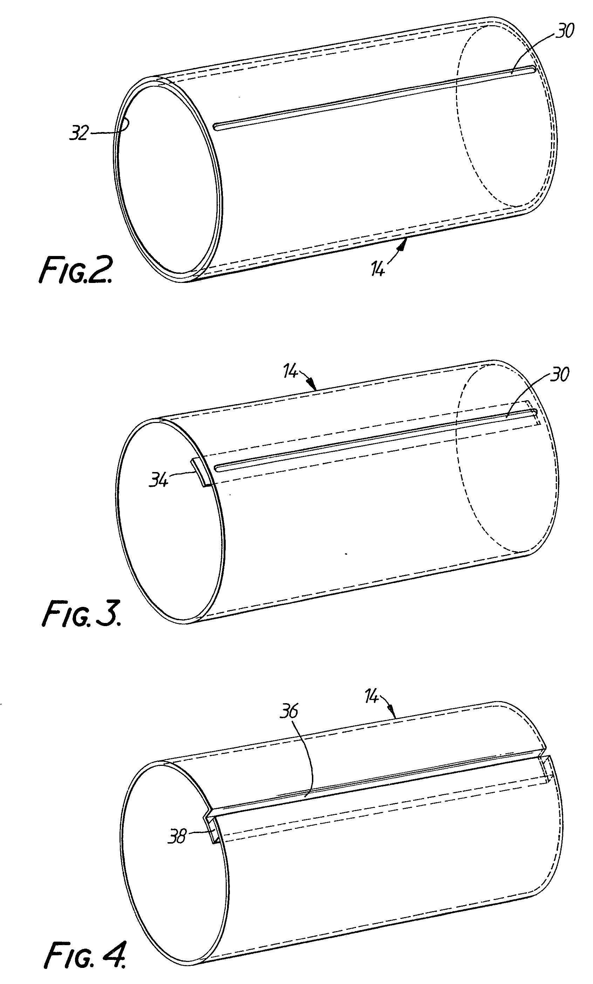

Figure 2 shows one way in which this may be done. Figure 2 shows a perspective view of the casing 14, only. As shown, it is provided with a longitudinal slit 30 which extends completely through the cylindrical wall of the casing and terminates just short of its two ends. An internal non-conductive insulating sleeve, such as made by plastics blow-moulding, is fitted within the casing 14 as shown at 32. This sleeve closes off the slit 30. It is found that so long as the slit 30 has sufficient length to extend beyond the axial length of the winding 8, the electrical impedance of the eddy current paths within the casing 14 are so increased as to reduce the eddy currents very substantially. The inductance of the winding 8 is thus found to be maintained substantially unaffected by the presence of the metal casing 14 and the transducer operates in a satisfactory manner to detect movement of the rod 5.

Figure 3 shows a modification in which the slit 30 is not closed off by the sleeve 32 of Figure 2 but is instead closed off by a strip of suitable metal 34 attached by the use of electrically insulating means. Again, the presence of the slit 30 so increases the impedance of the eddy current paths within the casing 14 that the transducer operates satisfactorily.

Figure 4 shows a further modification in which the casing 14 is completely slit through as at 36, the ends of the casing at the slit 36 being arranged to overlap and to be sealed together again by suitable electrically insulating material 38, such as by the use of insulating glue. The effect of the slit 36 is the same as the effect already described for the slit 30 in Figures 2 and 3.

Figure 5 shows an arrangement in which the casing is reduced in thickness at 40. The reduced thickness portion 40 may extend only partially along the length of the casing. It may be a continuous reduced thickness portion or be made up of two or more separate portions. its profile may differ from that shown. In each case, however, its effect is to increase the impedance of the eddy current paths within the casing 14 so that the transducer operates satisfactorily.

In these ways, a transducer of the form described can be provided with an external metal tube or casing without any significant adverse effect on its operation. This enables the transducer to be used in certain applications where such an external metal tube is required. For example, the transducer may be used to sense movement in an automatic vehicle suspension levelling arrangement. In such an arrangement, a transducer for sensing the instantaneous ride height of the vehicle is required. In such a case, the transducer may have to contain fluid under pressure. This necessitates an external metal casing in order to provide the necessary strength, and in the manner explained, the transducer is still able to sense movement satisfactorily.

It will be appreciated that the arrangements described with reference to Figures 2,3,4 and 5 for increasing the electrical impedance for the eddy current paths in the casing 14 are merely examples of many possible arrangements. For instance, it may be possible to provide local increase in impedance of the casing by use of special treatment processes.

## Claims

1. An electrical transducer, comprising an electrical winding (8), and an electrically conductive member (5) movable with respect to the winding (8) in dependence on movement to be detected whereby eddy currents are induced in the member (5) in dependence on the relative position of the member (5) and the winding (8) and affect the electrical impedance of the winding (8), and characterised by an external casing (14) of conductive material, the casing being adapted to increase the electrical impedance of the paths within it for eddy currents induced in it by the said winding (8), whereby to reduce the magnitude of the latter eddy currents and thereby reduce their effect on changes in electrical impedance in the said member (5).

2. A transducer according to claim 1, characterised in that the casing (14) is adapted to increase the impedance of the said paths within it by incorporating impedance means (30).

3. A transducer according to claim 2, characterised in that the impedance means is constituted by an interruption (30) in the casing (14).

4. A transducer according to claim 3, characterised by electrically insulating means (32,34,38) closing off the said interruption (30) whereby the casing (14) provides a closed enclosure for the transducer.

5. A transducer according to claim 3, characterised in that the interruption is a slit (30) through the wall of the casing (14).

6. A transducer according to claim 4, characterised in that the slit (30) is closed off by an electrically insulating sleeve (32) within the casing.

7. A transducer according to claim 4, characterised in that the slit (30) is closed off by a strip (34) secured to the wall of the casing (14) by insulating means.

8. A transducer according to claim 4, characterised in that the wall portions of the casing (14) overlap where they meet at the said slit (30) and are sealed together by insulating material (38).

9. A transducer according to claim 2, characterised in that the impedance means is incorporating by locally reducing the thickness (40) of the casing (14).

10. A transducer according to any preceding claim, characterised in that the interior of the casing (14) is pressurised.

11. A transducer according to any preceding claim, characterised by a device (24) for detecting changes in the electrical impedance of the winding (8) whereby to detect the said movement.

12. A transducer according to claim 11, characterised in that the device for detecting the changes in the impedance in the winding (8) comprises an electrical oscillator circuit whose oscillation frequency is dependent on the impedance of the winding.

13. A transducer according to any preceding claim, characterised in that the casing is a cylindrical metal casing (14), by a cylindrical electrically insulating former (6) inside the casing and coaxial therewith, in that the electrical winding (8) is wound on the former (6), and in that the said member is an electrically conducting core member (5) slidable axially with reference to the former (6) and the winding (14).

FIG. 1.

MEASURING UNIT

FIG. 5.

FIG.2.

FIG.3.

FIG. 4.